# EUROPÄISCHE PATENTSCHRIFT

(11) **EP 3 736 158 B1**
(45) Veröffentlichungstag und Bekanntmachung des Hinweises auf die Patenterteilung: **12.01.2022**
(21) Anmeldenummer: 20155991.1
(22) Anmeldetag: 07.02.2020
(51) Int. Cl.: B60K 17/28, F16H 3/093

(54) **ZAPFWELLENGETRIEBEANORDNUNG**
SPINDLE TRANSMISSION ARRANGEMENT
AGENCEMENT DE BOÎTE DE PRISE DE FORCE

(30) Priorität: 09.05.2019 DE 102019112158
(43) Veröffentlichungstag der Anmeldung: 11.11.2020
(73) Patentinhaber: CLAAS Tractor S.A.S., 78141 Vélizy-Villacoublay Cedex (FR)
(72) Erfinder: Wiedermann, Arno, Dr., 33397 Rietberg (DE); Birkmann, Christian, 33775 Versmold (DE); Otten, Ulli, 67361 Freisbach (DE); Fedde, Thomas, 33129 Delbrück (DE)
(74) Vertreter: CLAAS Gruppe

(56) Entgegenhaltungen:
- EP-A1- 1 467 123
- EP-A2- 1 186 458
- EP-A2- 3 085 567
- DE-A1-102011 084 622
- DE-A1-102011 084 623

## Beschreibung

Die vorliegende Erfindung betrifft eine Zapfwellengetriebeanordnung gemäß dem Oberbegriff des Anspruches 1.

Landwirtschaftliche oder kommunale Arbeitsfahrzeuge weisen eine Zapfwelle zum Antreiben von Anbaugeräten auf. Die Zapfwelle wird fahrzeugseitig über ein Zapfwellengetriebe durch Schalten eines zur Verfügung stehenden Übersetzungsverhältnisses mit einem Antriebsmotor des Arbeitsfahrzeuges gekoppelt. Dabei ist zwischen lastschaltbaren und nicht lastschaltbaren Zapfwellengetriebeanordnungen zu unterscheiden.

Aus der US 6,523,429 B2 ist eine nicht lastschaltbare Zapfwellengetriebeanordnung bekannt, welche zum Schalten unterschiedlicher Übersetzungsverhältnisse eine Klauenkupplung aufweist. Dabei ist vor Beginn des Betriebs des jeweiligen von einer Zapfwelle angetriebenen Anbaugerätes eines der Übersetzungsverhältnisse fest zu wählen und ein Wechsel in ein anderes Übersetzungsverhältnis kann bei fahrendem Arbeitsfahrzeug geändert werden, jedoch nicht bei laufender Zapfwelle. Beim Betreiben von Anbaugeräten, deren Last sich über die Einsatzzeit ändert, hat dies zur Folge, dass ein für den Volllastfall geeignetes Übersetzungsverhältnis im Zapfwellengetriebe zu wählen ist, um stets ein ausreichendes Drehmoment am Zapfwellenabtrieb darstellen zu können. Zu Beginn resultiert diese auf Volllast ausgerichtete Wahl dann allerdings bei geringen Drehmomenten in einem ungünstigeren Betrieb und auch einem höheren Kraftstoffverbrauch. Aus diesem Grunde werden Zapfwellengetriebeanordnungen lastschaltbar ausgeführt, so dass während eines Betriebs eines Anbaugeräts ein drehmomentabhängiger Wechsel zwischen Übersetzungsverhältnissen der Zapfwellengetriebeanordnung vollzogen und damit der Betrieb des Anbaugeräts optimiert werden kann.

Eine unter Last schaltbare Getriebeanordnung ist beispielsweise aus der EP 2 577 097 B1 bekannt. Bei dieser Getriebeanordnung werden die unterschiedlichen Übersetzungsverhältnisse und die daraus resultierenden verschiedenen Arbeitsdrehzahlen durch unterschiedliche Kupplungsanordnungen sowie Planetengetriebesätze eingestellt. Diese lastschaltbar ausgeführte Getriebeanordnung hat den Nachteil, dass sie gegenüber Zapfwellengetriebeanordnungen mit Klauenkupplungen einen größeren Bauraumbedarf aufweist und dies an einem Arbeitsfahrzeug konstruktiv aufwändig berücksichtigt werden muss.

Weitere Zapfwellengetriebeanordnungen sind aus der EP 3 085 567 A2 oder der DE 10 2011 084 622 A1 bekannt.

Daher liegt der Erfindung die Aufgabe zugrunde, eine Zapfwellengetriebeanordnung der eingangs genannten Art für ein landwirtschaftliches oder kommunales Arbeitsfahrzeug derart weiterzubilden, dass diese sich durch einen geringeren Bauraumbedarf auszeichnet und einen effizienten Betrieb ermöglicht.

Diese Aufgabe wird erfindungsgemäß durch die Merkmale des unabhängigen Anspruches 1 gelöst. Vorteilhafte Weiterbildungen sind Gegenstand der Unteransprüche.

Erfindungsgemäß wird eine Zapfwellengetriebeanordnung für ein kommunales oder landwirtschaftliches Arbeitsfahrzeug vorgeschlagen, umfassend eine Eingangswelle, die mit einem Antriebsmotor verbindbar ist, und eine Ausgangswelle, die zur Verbindung mit einem Anbaugerät eingerichtet ist, wobei die Eingangswelle und die Ausgangswelle von einem Gehäuse umgeben sind, wobei zwischen der Eingangswelle und der Ausgangswelle mehrere Übersetzungsstufen zur Kopplung mit unterschiedlichen Übersetzungsverhältnissen vorgesehen sind, wobei ein Wechsel zwischen den Übersetzungsverhältnissen unter Last vollziehbar ist, wobei die mindestens dreistufige, lastschaltbare Zapfwellengetriebeanordnung auf der Eingangswelle eine erste Kupplung und eine zweite Kupplung aufweist, wobei eine Kupplung eine erste Übersetzungsstufe mit einer ersten Übersetzung und einer zweiten Übersetzung und die andere Kupplung eine zweite Übersetzungsstufe mit zumindest einer weiteren Übersetzung aufweist, wobei die Übersetzungsstufen jeweils zur schaltbaren Kopplung der Eingangswelle mit der Ausgangswelle ausgebildet sind. Durch das Einbinden der lastschaltbaren Zapfwellengetriebeanordnung in ein Getriebemanagement der Arbeitsmaschine, kann der Antriebsmotor vermehrt im unteren Drehzahlenbereich betrieben werden. Hierdurch können der Kraftstoffverbrauch, die Geräuschemissionen sowie Vibrationen in der Fahrerkabine deutlich gesenkt werden. Die lastschaltbare Ausführung der Zapfwellengetriebeanordnung ermöglicht eine verbesserte und komfortablere Bedienung. Die erste Kupplung und die zweite Kupplung sind nach Art eines Doppelkupplungsgetriebes schaltbar.

Insbesondere kann auf der Ausgangswelle zumindest eine Schaltvorrichtung unterhalb einer der Kupplungen angeordnet sein. Mittels der zumindest einen Schaltvorrichtung sind eine erste Übersetzungsstufe und eine zweite Übersetzungsstufe auswählbar. Aufgrund der Anordnung der beiden Kupplungen auf der Eingangswelle und der Schaltvorrichtung unterhalb einer der Kupplungen auf der Ausgangswelle kann eine sehr kompakte Bauweise des lastschaltbaren und mindestens dreistufigen Zapfwellengetriebes erreicht werden. Bei sehr geringem Bauraumbedarf lassen sich je nach Bedarf unterschiedliche Arbeitsdrehzahlen an der Ausgangswelle bereitstellen, die auf das Anbaugerät übertragen werden. Vorteilhaft ist, dass beide Kupplungen gleichzeitig genutzt werden können, so dass Anbaugeräte mit hohen trägen Massen anlaufen können. Ein weiterer Vorteil besteht darin, dass die Zapfwellengetriebeanordnung so ausgeführt ist, dass diese als eine Einheit für sich, d.h. unabhängig von der Arbeitsmaschine, auf einem Prüfstand getestet werden kann.

Erfindungsgemäß ist der jeweiligen Kupplung zumindest ein auf der Eingangswelle drehbar gelagertes Zahnrad zugeordnet, welches formschlüssig mit der jeweiligen Kupplung in Eingriff bringbar ist. Insbesondere sind zumindest einer Kupplung zwei drehbar gelagerte Zahnräder zugeordnet, die formschlüssig mit der jeweiligen Kupplung in Eingriff bringbar sind.

Weiterhin können auf der Ausgangswelle drei Zahnräder angeordnet sein, wobei eines der Zahnräder drehfest und die beiden anderen Zahnräder drehmomentfrei auf der Ausgangswelle angeordnet sind. Diese Ausgestaltung kommt bei einer dreistufigen Zapfwellengetriebeanordnung zum Tragen.

Alternativ können auf der Ausgangswelle vier Zahnräder drehmomentfrei angeordnet sein. Diese Ausgestaltung kommt bei einer vierstufigen Zapfwellengetriebeanordnung zum Tragen.

Zumindest eines der drehmomentfreien Zahnräder auf der Ausgangswelle kann durch die zumindest eine Schaltvorrichtung mit der Ausgangswelle formschlüssig verbindbar sein. Durch die zumindest eine Schaltvorrichtung können eine erste Übersetzungsstufe und eine zweite Übersetzungsstufe ausgewählt werden. Durch das Schalten der ersten Kupplung und der zweiten Kupplung kann die zumindest eine dritte Übersetzungsstufe ausgewählt werden.

Erfindungsgemäß ist es zumindest eine Bremsvorrichtung vorgesehen, die auf zumindest ein Zahnrad einer der Übersetzungsstufen einwirkt. Mittels der Bremsvorrichtung kann ein an der Ausgangswelle angeschlossener Zapfwellenstummel innerhalb einer vorgegebenen Bremszeit zum Stillstand gebracht werden.

Bevorzugt können die erste Kupplung und die zweite Kupplung oberhalb eines Ölspiegels in dem Gehäuse angeordnet sein. Durch die Anordnung der ersten Kupplung und der zweiten Kupplung auf der Eingangswelle oberhalb des Ölspiegels laufen diese trocken, wodurch Planschverluste vermieden und die Effizienz erhöht werden kann. Zudem wird somit sichergestellt, dass kein Schmieröl von außen in Kupplungslamellenpakete der jeweiligen Kupplung gelangen kann. Dadurch ergibt sich kein Schleppmoment der Kupplungen, welches einen mit der Ausgangswelle verbundenen Zapfwellenstummel unzulässig in dieser Position verdrehen könnte. Ein weiterer Vorteil, der aus dieser Anordnung resultiert, ist, dass sich der Zapfwellenstummel leicht von außen und per Hand verdrehen lässt.

Damit wird ein leichter und sicherer Anbau einer Gelenkwelle an den Zapfwellenstummel ermöglicht.

Gemäß einer bevorzugten Ausführungsform kann die Eingangswelle als eine Vollwelle ausgeführt sein, in der zumindest eine Bohrung zur Zuführung eines Kühlmediums zu der ersten Kupplung und der zweiten Kupplung vorgesehen ist. Hierfür kann die Zuführung des Kühlmediums durch zumindest ein schaltbares Ventil steuerbar sein. Während und nach einem jeweiligen Lastschaltvorgang kann der jeweiligen Kupplung durch den zumindest einen Kanal das Kühlmedium zugeführt werden. Durch das zumindest eine schaltbare Ventil kann die zeitliche Dauer der Zuführung des Kühlmediums gesteuert werden. Je nach Art der Lastschaltung (softstart oder einfache Lastschaltung) und der dabei verbrauchten Schaltleistung, kann die Menge des Kühlmediums ermittelt und abgegeben werden.

Insbesondere kann das zumindest eine Ventil zur Steuerung des Kühlmedienstroms in Abhängigkeit vom Stromverlauf eines jeweiligen Stetigventils angesteuert werden, welches der Ansteuerung der ersten Kupplung bzw. der zweiten Kupplung dient. Die Berechnung der Menge an Kühlmedium erfolgt anhand des Kupplungsdrucks und des Differenzdrehzahlverlaufs über die Schaltzeit des der jeweiligen Kupplung zugeordneten Stetigventils, das insbesondere als elektrisch angesteuertes Proportionalventil ausgeführt ist, zur Beaufschlagung der jeweiligen Kupplung mit einem Druckmedium. Nach Abschluss der Kühlzeit wird das Ventil vollkommen geschlossen, so dass kein Kühlmedium zwischen die Kupplungslamellenpakete der Kupplungen gelangt. Auf diese Weise können die Schleppverluste der Kupplungen sehr gering gehalten werden. Durch einen zeitlich genau schaltbaren Kühlölstrom zu den Kupplungslamellenpaketen wird eine bedarfsgerechte Kühlung der nassen Kupplungen erreicht. Die benötigte Menge an Kühlmedium wird aus der tatsächlich erbrachten Schaltleistung der jeweils geschlossenen Kupplung bemessen. Ein weiterer Vorteil ergibt sich daraus, dass die gesamte benötigte Menge des Kühlmediums zur Kühlung der jeweiligen Kupplung somit stark reduziert ist, sodass die Getriebeölpumpe kleiner bemessen werden kann. Hierdurch können Kosten gespart und die Verlustleistung verringert werden.

Insbesondere kann die Ausgangswelle als Vollwelle ausgeführt sein. Dabei kann das drehfest auf der Ausgangswelle angeordnete Zahnrad eine Nabe mit einer Innenverzahnung aufweisen, die mit einem außenverzahnten Abschnitt auf der Ausgangswelle in Eingriff bringbar ist.

Des Weiteren können in der Eingangswelle Kanäle zur separaten Zuführung eines Druckmittels zu der ersten Kupplung und der zweiten Kupplung vorgesehen sein. Die separate Zuführung von Drucköl zu der ersten und zweiten Kupplung ermöglicht es, diese separat über jeweils ein Stetigventil, insbesondere ein elektrisch angesteuertes Proportionalventil, anzusteuern.

Die Kupplungen sind insbesondere für ein minimiertes Schleppmoment in der Neutralstellung der zumindest einen Schaltvorrichtung ausgelegt. Vorzugsweise können die erste Kupplung und die zweite Kupplung mit gewellten Abstandsringen zwischen Reiblamelle und Drucklamelle versehen sein. Die gewellten Abstandsringe zwischen Reibscheibe und Druckscheibe sorgen dafür, dass sich die Reibpartner in dieser Position nicht berühren und dass das verbleibende Schmieröl und Kühlöl rasch und ungehindert das Kupplungslamellenpaket verlassen kann.

Vorzugsweise kann die Zapfwellengetriebeanordnung modular aufgebaut sein. Dazu kann sich die Zapfwellengetriebeanordnung aus einem Baukasten mit einem hohen Anteil gleicher Komponenten bedienen, die entsprechend der Komplexität bzw. Betriebscharakteristik der jeweiligen Zapfwellengetriebeanordnungen ausgewählt werden.

Die vorliegende Erfindung wird nachstehend anhand von in den Zeichnungen dargestellten Ausführungsbeispielen näher erläutert.

Es zeigen:
- Fig. 1: eine dreistufige Zapfwellengetriebeanordnung gemäß einer ersten Ausführungsform;
- Fig. 2: eine dreistufige Zapfwellengetriebeanordnung gemäß einer zweiten Ausführungsform; und
- Fig. 3: eine vierstufige Zapfwellengetriebeanordnung gemäß einer dritten Ausführungsform.

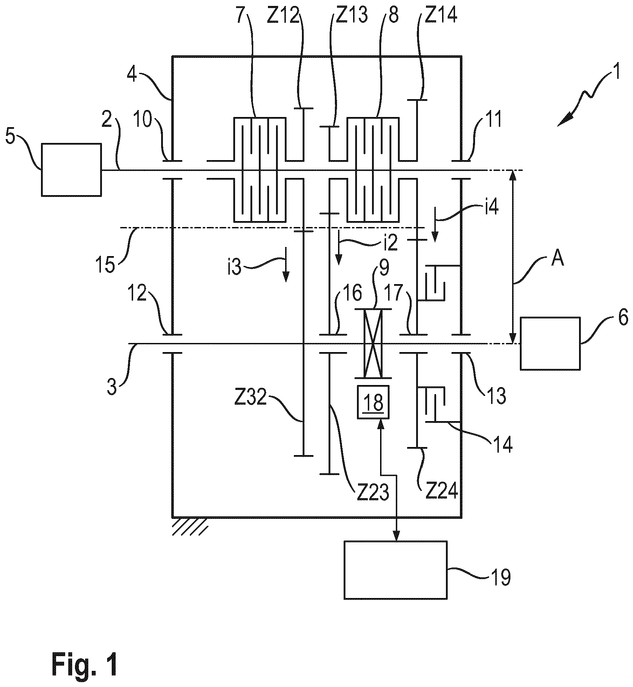

Die Darstellung in Fig. 1 zeigt eine dreistufige Zapfwellengetriebeanordnung 1 gemäß einer ersten Ausführungsform. Eine solche Zapfwellengetriebeanordnung 1 kommt bei landwirtschaftlichen oder kommunalen Arbeitsfahrzeugen zum Einsatz, an die anzutreibende Anbaugeräte angeschlossen werden. Die Zapfwellengetriebeanordnung 1 ist erfindungsgemäß derart ausgebildet, dass diese an einen vorhandenen Bauraum einer klauengeschalteten Zapfwelle angepasst ist. Es sind keine Anpassungen angrenzender Bauteile vorzunehmen, so dass die Zapfwellengetriebeanordnung 1 als eine auswählbare Option bei der Konfiguration eines Arbeitsfahrzeugs ab Werk oder als zu einem späteren Zeitpunkt nachrüstbare Option zur Verfügung steht, um eine klauengeschaltete Zapfwelle unter Last schaltbar zu machen.

Die erfindungsgemäße Zapfwellengetriebeanordnung 1 umfasst eine Eingangswelle 2 und eine hierzu achsparallel angeordnete Ausgangswelle 3, die in einem Gehäuse 4 angeordnet sind. Die Eingangswelle 2 ist mit einem Antriebsmotor 5, insbesondere einem Verbrennungsmotor, trieblich verbindbar. Die Ausgangswelle 3 ist mit einem anzutreibenden Anbaugerät 6 verbindbar. Die Eingangswelle 2 ist oberhalb der Ausgangswelle 3 angeordnet. Zwischen der Eingangswelle 2 und der Ausgangswelle 3 sind drei Übersetzungsstufen, bestehend aus drei Zahnradpaarungen Z12 und Z32, Z13 und Z23 sowie Z14 und Z24, zur Kopplung mit unterschiedlichen Übersetzungsverhältnissen i2, i3, i4 vorgesehen. Die Eingangswelle 2 hat zu der Ausgangswelle 3 einen Achsabstand A. Das zweite Übersetzungsverhältnis i2 hat den Wert 2,78, das dritte Übersetzungsverhältnis i3 hat den Wert 1,81 und das vierte Übersetzungsverhältnis i4 hat den Wert 1,53. In einer Übersetzungsstufe 540E stellt sich beim zweiten Übersetzungsverhältnis i2 eine Arbeitsdrehzahl von 540 U/min ein, welche bei reduzierter Motordrehzahl des Antriebsmotors 5 zur Verfügung steht. In einer Übersetzungsstufe 1000 stellt sich beim dritten Übersetzungsverhältnis i3 eine Arbeitsdrehzahl von 1000 U/min ein, welche bei Motornenndrehzahl des Antriebsmotors 5 zur Verfügung steht. In einer Übersetzungsstufe 1000E stellt sich beim vierten Übersetzungsverhältnis i4 eine Arbeitsdrehzahl von 1000 U/min ein, welche bei reduzierter Motordrehzahl des Antriebsmotors 5 zur Verfügung steht.

Auf der Eingangswelle 2 sind eine erste lastschaltbare Kupplung 7 und eine zweite lastschaltbare Kupplung 8 angeordnet. Die erste Kupplung 7 und die zweite Kupplung 8 sind jeweils als Lamellenkupplungen ausgeführt. Auf der Ausgangswelle 3 ist eine Schaltvorrichtung 9 zur Auswahl der Übersetzungsstufe 540E mit dem zweiten Übersetzungsverhältnis i2 oder der Übersetzungsstufe 1000E mit dem vierten Übersetzungsverhältnis i4 angeordnet. Weiterhin ist eine Bremsvorrichtung 14 vorgesehen, die auf die Ausgangswelle 3 einwirken kann.

Die Eingangswelle 2 und die Ausgangswelle 3 sind bevorzugt als einteilige Vollwellen ausgebildet. Die Eingangswelle 2 ist koaxial zur Kurbelwelle des Antriebsmotors 5 angeordnet. Die Eingangswelle 2 ist in Lagerstellen 10 und 11 beispielsweise mittels Wälzlagern gelagert. Die Eingangswelle 2 weist an ihrem inneren, dem Antriebsmotor 5 zugewandten, Ende eine Innenverzahnung auf, die mit einer Zapfwellenantriebswelle des Antriebsmotors 5 formschlüssig verbindbar ist. Die erste Kupplung 7 und die zweite Kupplung 8 sind drehmomentfrei auf der Eingangswelle 2 angeordnet. Dabei ist die erste Kupplung 7 im Wesentlichen mittig auf der Eingangswelle 2 positioniert. Die Ausgangswelle 3 weist an ihrem dem Anbaugerät 6 zugewandten Ende eine baugleiche Schnittstelle zum Zapfwellenstummel auf wie die Ausgangswelle einer klauengeschalteten Zapfwellengetriebeanordnung. Die Ausgangswelle 3 ist in Lagerstellen 12 und 13 mittels Wälzlagern gelagert. Der Achsabstand A zwischen der Eingangswelle 2 und der Ausgangswelle 3 entspricht dem Achsabstand der Wellen einer zu ersetzenden klauengeschalteten Zapfwellengetriebeanordnung zueinander.

Die Eingangswelle 2 ist derart gestaltet, dass die Drehmomentverbindung zu dem Antriebsmotor 5 mit einer bereits vorhandenen Antriebswelle, wie sie für eine klauengeschaltete Zapfwelle vorgesehen ist, hergestellt werden kann. Die Abtriebswelle 3 ist im hinteren Bereich so gestaltet, dass die Verbindung zu dem Anbaugerät 6 mittels einer Gelenkwelle erfolgen kann, die bei der klauengeschalteten Zapfwelle Verwendung findet.

Die Anordnung der ersten Kupplung 7 und der zweiten Kupplung 8 auf der Eingangswelle 2 ist oberhalb eines Ölspiegels 15 im Inneren des die Zapfwellengetriebeanordnung 1 umgebenden Gehäuses 4 ausgeführt und stellt somit sicher, dass kein Öl von außen in die Kupplungslamellenpakete der ersten Kupplung 7 bzw. der zweiten Kupplung 8 gelangen kann.

Auf der Eingangswelle 2 ist der ersten Kupplung 7 nachgelagert ein Zahnrad Z12 drehbar gelagert angeordnet. Bei einer Druckbeaufschlagung der ersten Kupplung 7 mit einem Drucköl stellt diese eine reibschlüssige Verbindung zwischen der Eingangswelle 2 und dem Zahnrad Z12 her. Vor der zweiten Kupplung 8 ist ein Zahnrad Z13 und hinter der zweiten Kupplung 8 ist ein Zahnrad Z14 drehbar gelagert angeordnet. Bei einer Druckbeaufschlagung der zweiten Kupplung 8 mit einem Drucköl stellt diese eine reibschlüssige Verbindung zwischen der Eingangswelle 2 und den Zahnrädern Z13 und Z14 her. Dazu sind die Kupplungstrommeln der ersten Kupplung 7 und der zweiten Kupplung 8 derart ausgebildet, dass an einem vorderen und/oder hinteren Ende der ersten Kupplung 7 und der zweiten Kupplung 8 das jeweilige auf der Eingangswelle 2 drehbar gelagerte Zahnrad Z12 bzw. Z13 und Z14 formschlüssig mit der ersten Kupplung 7 bzw. der zweiten Kupplung 8 verbunden sind.

Auf der Ausgangswelle 3 ist ein Zahnrad Z32 drehfest angeordnet. Für eine formschlüssige Anordnung auf der Ausgangswelle 3 weist das Zahnrad 32 eine Nabe mit einer Innenverzahnung auf, die mit einem korrespondierenden Außenverzahnungsabschnitt auf der Ausgangswelle 3 in Eingriff steht. Das Zahnrad Z32 kämmt mit dem Zahnrad Z12. Dem Zahnrad Z32 nachgeordnet sind Zahnräder Z23 und Z24 auf der Ausgangswelle 3 drehbar gelagert angeordnet. Die Zahnräder Z23 und Z24 sind jeweils mittels einer Lagerstelle 16 bzw. 17 drehbar gelagert. Zwischen den Zahnrädern Z23 und Z24 ist eine Schaltvorrichtung 9 angeordnet. Die Schaltvorrichtung 9 ist mittels einer Wellen-Naben-Verbindung drehfest mit der Ausgangswelle 3 verbunden. Die Schaltvorrichtung 9 ist unterhalb der zweiten Kupplung 8 platziert, wodurch eine sehr kompakte Bauweise der Zapfwellenanordnung 1 erreicht wird. Insbesondere weist die Schaltvorrichtung 9 drei Schaltpositionen auf, eine erste Schaltposition 540E, eine Neutralstellung und eine zweite Schaltposition 1000E. In der ersten Schaltposition 540E verbindet die Schaltvorrichtung 9 das Zahnrad Z23 formschlüssig mit der Ausgangswelle 3. In der zweiten Schaltposition 1000E verbindet die Schaltvorrichtung 9 das Zahnrad Z24 formschlüssig mit der Ausgangswelle 3.

Die Bremsvorrichtung 14 wirkt im dargestellten Ausführungsbeispiel auf das Zahnrad Z24 ein, wodurch dieses gegenüber dem Gehäuse 4 abgebremst werden kann. Diese Anordnung der Bremsvorrichtung 14 setzt voraus, dass die Schaltvorrichtung 9 sich in der zweiten Schaltstellung 1000E befindet. Zur Ansteuerung der Bremsvorrichtung 14 kann ein hydraulisch betätigbares Ventil vorgesehen sein.

Durch die Betätigung eines Schalters oder eines Bedienhebels in einer Fahrerkabine des Arbeitsfahrzeugs wird ein Steuerbefehl an eine Steuervorrichtung 19 übermittelt, um die Ausgangswelle 3 einzuschalten und das Anbaugerät 6 auf eine Arbeitsdrehzahl zu bringen. Eine in der Steuervorrichtung 19 hinterlegte Getriebesoftware wertet den übermittelten Steuerbefehl aus. Die Steuervorrichtung 19 steuert die Schaltvorrichtung 9 an und überführt diese in eine der Schaltpositionen 540E, Neutralstellung oder 1000E. Ein Wegsensor 18, welcher der Schaltvorrichtung 9 zugeordnet ist, erkennt die gewählte Schaltposition der Schaltvorrichtung 9. Signale des Wegsensors 18 werden durch eine Signalleitung an die Steuervorrichtung 19 übertragen und von dieser ausgewertet.

Die Steuervorrichtung 19 steuert die Schaltvorrichtung 9 an und überführt diese in die erste Schaltposition 540E. Die erste Kupplung 7 und die zweite Kupplung 8 werden durch Druckbeaufschlagung gleichzeitig geschlossen. Beide Kupplungen 7, 8 übertragen gleichzeitig ein Anfahrmoment auf die Ausgangswelle 3, womit das angeschlossene Anbaugerät 6 beschleunigt wird. Erreicht das noch nötige Anlaufmoment das erbringbare Rutschmoment der zweiten Kupplung 8, wird die erste Kupplung 7 ausgeschaltet. Der Kraftfluss von der Eingangswelle 2 zur Ausgangswelle 3 erfolgt über die Zahnradkette Zahnrad Z13 und Zahnrad Z23. Nach Abschluss der Rutschzeit der zweiten Kupplung 8 wird ein Zapfwellenstummel an der Ausgangswelle 3 mit einer festen Drehzahl von 540 U/min betrieben, welche der mit dem zweiten Übersetzungsverhältnis i2 der Übersetzungsstufe 540E übertragenen reduzierten Motordrehzahl entspricht.

Soll ausgehend von der ersten Schaltposition 540E der Schaltvorrichtung 9 die Arbeitsdrehzahl der Ausgangswelle 3 von 540 U/min bei reduzierter Motordrehzahl auf die Arbeitsdrehzahl 1000 U/min bei Motornenndrehzahl erhöht werden, was der Übersetzungsstufe 1000 entspricht, so wird zunächst die Motordrehzahl des Antriebsmotors 5 soweit erhöht, dass nach erfolgter Lastschaltung das verfügbare Motordrehmoment noch ausreichend ist, um den Fahrzustand des Arbeitsfahrzeugs beizubehalten. Diese Drehzahlerhöhung kann maximal bis zum Erreichen der Motornenndrehzahl des als Verbrennungsmotors ausgeführten Antriebsmotors 5 erhöht werden. Die Übersetzung eines Fahrgetriebes des Arbeitsfahrzeugs kann mittels eines stufenlosen Fahrantriebs so angepasst werden, dass die Fahrgeschwindigkeit bei Anheben dieser Motordrehzahl nahezu konstant bleibt.

Nachdem die Motordrehzahlerhöhung vorgenommen worden ist, findet eine Lastschaltung der beiden Kupplungen 7 und 8 der Zapfwellengetriebeanordnung 1 statt, um die Arbeitsdrehzahl von 540 U/min bei reduzierter Motordrehzahl (540E) auf die Arbeitsdrehzahl 1000 U/min zu erhöhen. Hierzu wird in bekannter Weise durch eine Lastschaltung die zweite Kupplung 8 geöffnet und die erste Kupplung 7 geschlossen. Der Kraftfluss von der Eingangswelle 2 zur Ausgangswelle 3 erfolgt nun über die Zahnradkette Zahnrad Z12 und Z32.

Soll die Ausgangswelle 3 ausgehend von der Arbeitsdrehzahl 1000 U/min in der Übersetzungsstufe 1000 mit der Arbeitsdrehzahl 1000 U/min in der Übersetzungsstufe 1000E betrieben werden, so wird vor der Lastschaltung die Schaltvorrichtung 9 von der Steuervorrichtung 19 angesteuert, um die Schaltvorrichtung 9 von der ersten Schaltposition 540E in die zweite Schaltposition 1000E zu überführen. Nachdem der Abschluss der Änderung der Schaltposition der Schaltvorrichtung 9 durch den der Wegsensor 18 detektiert wurde, wird die Lastschaltung der beiden Kupplungen 7, 8 vorgenommen, indem die erste Kupplung 7 geöffnet und die zweite Kupplung 8 geschlossen wird. Dabei wird die Motordrehzahl auf etwa 85% der Motordrehzahl eingestellt, die vor dem Lastschaltvorgang am Motor anlag. Während dieses Lastschaltvorgangs kann das Fahrgetriebe dazu genutzt werden, um die Fahrgeschwindigkeit des Arbeitsfahrzeugs auf einen gewünschten Wert einzustellen. Der Kraftfluss von der Eingangswelle 2 zur Ausgangswelle 3 erfolgt nun über die Zahnradkette Zahnrad Z14 und Zahnrad Z24.

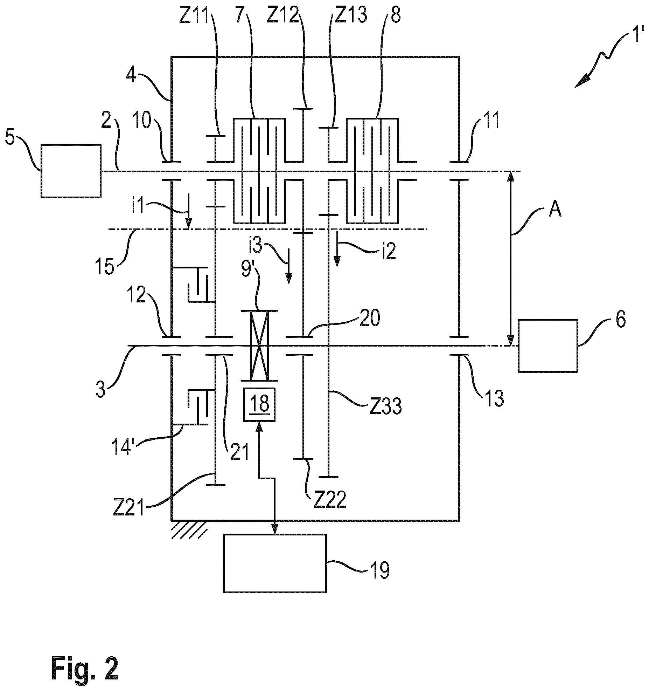

In Fig. 2 ist eine dreistufige Zapfwellengetriebeanordnung 1' gemäß einer zweiten Ausführungsform dargestellt. Die Zapfwellengetriebeanordnung 1' gemäß der zweiten Ausführungsform basiert auf dem Aufbau der Zapfwellengetriebeanordnung 1 gemäß der ersten Ausführungsform. Die Ausgestaltung beider Zapfwellengetriebe 1 und 1' ist hinsichtlich der verwendeten Komponenten modular ausgeführt, so dass durch das Weglassen und Hinzufügen spezifischer Komponenten unterschiedliche Betriebscharakteristika erzielbar sind. Daher werden für mit der Zapfwellengetriebeanordnung 1 identische Komponenten der Zapfwellengetriebeanordnung 1' die bereits vergebenen Bezugszeichen beibehalten.

Die Zapfwellengetriebeanordnung 1' umfasst eine Eingangswelle 2 und eine hierzu achsparallel angeordnete Ausgangswelle 3, die in einem Gehäuse 4 angeordnet sind. Die Eingangswelle 2 ist mit einem Antriebsmotor 5, insbesondere einem Verbrennungsmotor, trieblich verbindbar. Die Ausgangswelle 3 ist mit einem anzutreibenden Anbaugerät 6 verbindbar. Die Eingangswelle 2 ist oberhalb der Ausgangswelle 3 angeordnet. Zwischen der Eingangswelle 2 und der Ausgangswelle 3 sind drei Übersetzungsstufen, bestehend aus drei Zahnradpaarungen Z11 und Z21, Z12 und Z22 sowie Z13 und Z33, zur Kopplung mit unterschiedlichen Übersetzungsverhältnissen i1, i2, i3 vorgesehen. Die Eingangswelle 2 hat zu der Ausgangswelle 3 einen Achsabstand A. Das erste Übersetzungsverhältnis i1 hat den Wert 3,29, das zweite Übersetzungsverhältnis i2 hat den Wert 2,78 und das dritte Übersetzungsverhältnis i3 hat den Wert 1,81. In einer Übersetzungsstufe 540 stellt sich beim ersten Übersetzungsverhältnis i1 eine Arbeitsdrehzahl von 540 U/min ein, welche bei Motornenndrehzahl des Antriebsmotors 5 zur Verfügung steht. In einer Übersetzungsstufe 540E stellt sich beim zweiten Übersetzungsverhältnis i2 eine Arbeitsdrehzahl von 540 U/min ein, welche bei reduzierter Motordrehzahl des Antriebsmotors 5 zur Verfügung steht. In einer Übersetzungsstufe 1000 stellt sich beim dritten Übersetzungsverhältnis i3 eine Arbeitsdrehzahl von 1000 U/min ein, welche bei Motornenndrehzahl des Antriebsmotors 5 zur Verfügung steht.

Auf der Eingangswelle 2 sind eine erste lastschaltbare Kupplung 7 und eine zweite lastschaltbare Kupplung 8 angeordnet. Die erste Kupplung 7 und die zweite Kupplung 8 sind jeweils als Lamellenkupplungen ausgeführt. Auf der Ausgangswelle 3 ist eine Schaltvorrichtung 9' zur Auswahl der Übersetzungsstufe 540 mit dem ersten Übersetzungsverhältnis i1 oder der Übersetzungsstufe 1000 mit dem dritten Übersetzungsverhältnis i3 angeordnet. Weiterhin ist eine Bremsvorrichtung 14' vorgesehen, die auf die Ausgangswelle 3 einwirken kann.

Vor der ersten Kupplung 7 ist ein Zahnrad Z11 und hinter der zweiten Kupplung 7 ist ein Zahnrad Z12 drehbar gelagert angeordnet. Bei einer Druckbeaufschlagung der ersten Kupplung 7 mit einem Drucköl stellt diese eine reibschlüssige Verbindung zwischen der Eingangswelle 2 und den Zahnrädern Z11 und Z12 her. Vor der zweiten Kupplung 8 ist ein Zahnrad Z13 drehbar gelagert angeordnet. Bei einer Druckbeaufschlagung der zweiten Kupplung 8 mit einem Drucköl stellt diese eine reibschlüssige Verbindung zwischen der Eingangswelle 2 und dem Zahnrad Z13 her. Dazu sind die Kupplungstrommeln der ersten Kupplung 7 und der zweiten Kupplung 8 derart ausgebildet, dass an einem vorderen und/oder hinteren Ende der ersten Kupplung 7 und der zweiten Kupplung 8 das jeweilige auf der Eingangswelle 2 drehbar gelagerte Zahnrad Z11 und Z12 bzw. Z13 formschlüssig mit der ersten Kupplung 7 bzw. der zweiten Kupplung 8 verbunden sind.

Auf der Ausgangswelle 3 sind Zahnräder Z21 und Z22 drehbar gelagert angeordnet. Die Zahnräder Z21 und Z22 sind jeweils mittels einer Lagerstelle 20 bzw. 21 drehbar gelagert. Zwischen den Zahnrädern Z21 und Z22 ist die Schaltvorrichtung 9' angeordnet. Die Schaltvorrichtung 9' ist mittels einer Wellen-Naben-Verbindung drehfest mit der Ausgangswelle 3 verbunden. Die Schaltvorrichtung 9' ist unterhalb der ersten Kupplung 7 platziert, wodurch eine sehr kompakte Bauweise der Zapfwellenanordnung 1' erreicht wird.

Dem Zahnrad Z22 nachgelagert ist ein Zahnrad Z33 drehfest auf der Ausgangswelle 3 angeordnet. Für eine formschlüssige Anordnung auf der Ausgangswelle 3 weist das Zahnrad 33 eine Nabe mit einer Innenverzahnung auf, die mit einem korrespondierenden Außenverzahnungsabschnitt auf der Ausgangswelle 3 in Eingriff steht. Das Zahnrad Z33 kämmt mit dem Zahnrad Z13. Die Schaltvorrichtung 9' weist drei Schaltpositionen auf, eine erste Schaltposition 540, eine Neutralstellung und eine zweite Schaltposition 1000. In der ersten Schaltposition 540 verbindet die Schaltvorrichtung 9' das Zahnrad Z21 formschlüssig mit der Ausgangswelle 3. In der zweiten Schaltposition 1000 verbindet die Schaltvorrichtung 9 das Zahnrad Z22 formschlüssig mit der Ausgangswelle 3.

Die Bremsvorrichtung 14' wirkt im dargestellten Ausführungsbeispiel auf das Zahnrad Z21 ein, wodurch dieses gegenüber dem Gehäuse 4 abgebremst werden kann. Diese Anordnung der Bremsvorrichtung 14' setzt voraus, dass zur Erzielung der Bremswirkung die Schaltvorrichtung 9' sich in der ersten Schaltstellung 540 befindet. Zur Ansteuerung der Bremsvorrichtung 14' kann ein hydraulisch betätigbares Ventil vorgesehen sein.

Durch die Betätigung eines Schalters oder eines Bedienhebels in einer Fahrerkabine des Arbeitsfahrzeugs wird ein Steuerbefehl an die Steuervorrichtung 19 übermittelt, um die Ausgangswelle 3 einzuschalten und das Anbaugerät 6 auf eine Arbeitsdrehzahl zu bringen. Eine in der Steuervorrichtung 19 hinterlegte Getriebesoftware wertet den übermittelten Steuerbefehl aus. Die Steuervorrichtung 19 steuert die Schaltvorrichtung 9' an und überführt diese in eine der Schaltpositionen 540, Neutralstellung oder 1000E. Ein Wegsensor 18, welcher der Schaltvorrichtung 9' zugeordnet ist, erkennt die gewählte Schaltposition. Signale des Wegsensors 18 werden durch eine Signalleitung an die Steuervorrichtung 19 übertragen und von dieser ausgewertet.

Die Steuervorrichtung 19 steuert die Schaltvorrichtung 9' an und überführt diese in die erste Schaltposition 540. Die erste Kupplung 7 und die zweite Kupplung 8 werden durch Druckbeaufschlagung gleichzeitig geschlossen. Beide Kupplungen 7, 8 übertragen gleichzeitig ein Anfahrmoment auf die Ausgangswelle 3, womit das angeschlossene Anbaugerät 6 beschleunigt wird. Erreicht das noch nötige Anlaufmoment das erbringbare Rutschmoment der ersten Kupplung 7, wird die zweite Kupplung 8 ausgeschaltet. Der Kraftfluss von der Eingangswelle 2 zur Ausgangswelle 3 erfolgt über die Zahnradkette Zahnrad Z11 und Zahnrad Z21. Nach Abschluss der Rutschzeit der ersten Kupplung 7 wird ein Zapfwellenstummel an der Ausgangswelle 3 mit einer festen Drehzahl von 540 U/min betrieben, welche der mit dem ersten Übersetzungsverhältnis i1 der Übersetzungsstufe 540 übertragenen Motordrehzahl entspricht.

Soll ausgehend von der ersten Schaltposition 540 der Schaltvorrichtung 9' die Arbeitsdrehzahl der Ausgangswelle 3 von 540 U/min auf die Arbeitsdrehzahl 1000 U/min bei Motornenndrehzahl erhöht werden, was der Übersetzungsstufe 1000 entspricht, so wird zunächst die Schaltvorrichtung 9' angesteuert, um diese von der Schaltposition 540 in die Schaltposition 1000 zu überführen. Anschließend wird die Motordrehzahl des Antriebsmotors 5 entsprechend erhöht. Der Kraftfluss von der Eingangswelle 2 zur Ausgangswelle 3 erfolgt über die Zahnradkette Zahnrad Z12 und Zahnrad Z22.

Soll die Ausgangswelle 3 ausgehend von der Arbeitsdrehzahl 1000 U/min in der Übersetzungsstufe 1000 mit der Arbeitsdrehzahl 540 U/min in der Übersetzungsstufe 540E betrieben werden, so wird vor der Lastschaltung die Motordrehzahl abgesenkt. Danach wird die Lastschaltung der beiden Kupplungen 7, 8 vorgenommen, indem die erste Kupplung 7 geöffnet und die zweite Kupplung 8 geschlossen wird. Der Kraftfluss von der Eingangswelle 2 zur Ausgangswelle 3 erfolgt nun über die Zahnradkette Zahnrad Z13 und Zahnrad Z33.

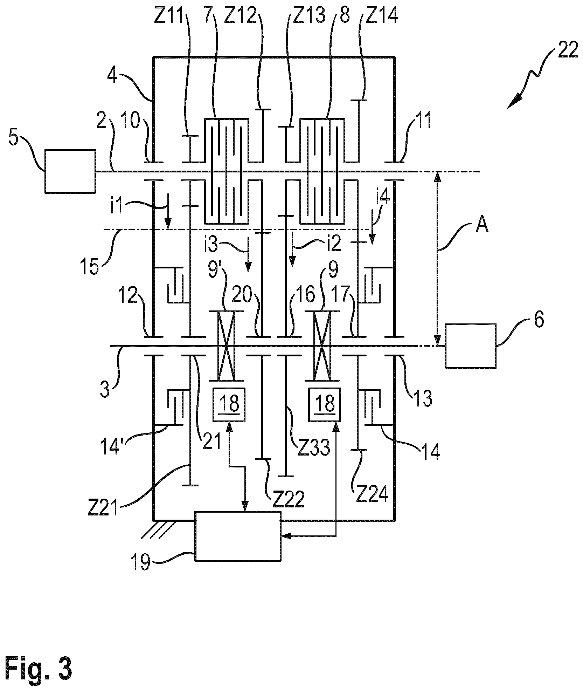

Die Darstellung in Fig. 3 zeigt eine vierstufige Zapfwellengetriebeanordnung 22 gemäß einer dritten Ausführungsform. Die Zapfwellengetriebeanordnung 22 gemäß der dritten Ausführungsform basiert auf dem Aufbau der Zapfwellengetriebeanordnungen 1 und 1' gemäß den vorangehend beschriebenen Ausführungsformen. Die Ausgestaltung der Zapfwellengetriebe 1, 1' und 22 ist hinsichtlich der verwendeten Komponenten modular ausgeführt. Daher werden für mit der Zapfwellengetriebeanordnung 1 bzw. 1' identische Komponenten der Zapfwellengetriebeanordnung 22 die bereits vergebenen Bezugszeichen beibehalten.

Die vierstufige Zapfwellengetriebeanordnung 22 umfasst eine Eingangswelle 2 und eine hierzu achsparallel angeordnete Ausgangswelle 3, die in einem Gehäuse 4 angeordnet sind. Die Eingangswelle 2 ist mit einem Antriebsmotor 5, insbesondere einem Verbrennungsmotor, trieblich verbindbar. Die Ausgangswelle 3 ist mit einem anzutreibenden Anbaugerät 6 verbindbar. Die Eingangswelle 2 ist oberhalb der Ausgangswelle 3 angeordnet. Zwischen der Eingangswelle 2 und der Ausgangswelle 3 sind vier Übersetzungsstufen, bestehend aus vier Zahnradpaarungen Z11 und Z21, Z12 und Z22, Z13 und Z23 sowie Z14 und Z24 zur Kopplung mit vier unterschiedlichen Übersetzungsverhältnissen i1, i2, i3, i4 vorgesehen. Die Eingangswelle 2 hat zu der Ausgangswelle 3 einen Achsabstand A. Das erste Übersetzungsverhältnis i1 hat den Wert 3,29, das zweite Übersetzungsverhältnis i2 hat den Wert 2,78, das dritte Übersetzungsverhältnis i3 hat den Wert 1,81 und das vierte Übersetzungsverhältnis i4 hat den Wert 1,53. In einer Übersetzungsstufe 540 stellt sich beim ersten Übersetzungsverhältnis i1 eine Arbeitsdrehzahl von 540 U/min ein, welche bei Motornenndrehzahl des Antriebsmotors 5 zur Verfügung steht. In einer Übersetzungsstufe 540E stellt sich beim zweiten Übersetzungsverhältnis i2 eine Arbeitsdrehzahl von 540 U/min ein, welche bei reduzierter Motordrehzahl des Antriebsmotors 5 zur Verfügung steht. In einer Übersetzungsstufe 1000 stellt sich beim dritten Übersetzungsverhältnis i3 eine Arbeitsdrehzahl von 1000 U/min ein, welche bei Motornenndrehzahl des Antriebsmotors 5 zur Verfügung steht. In einer Übersetzungsstufe 1000E stellt sich beim vierten Übersetzungsverhältnis i4 eine Arbeitsdrehzahl von 1000 U/min ein, welche bei reduzierter Motordrehzahl des Antriebsmotors 5 zur Verfügung steht.

Auf der Eingangswelle 2 sind die erste lastschaltbare Kupplung 7 und die zweite lastschaltbare Kupplung 8 angeordnet. Auf der Ausgangswelle 3 ist eine Schaltvorrichtung 9' zur Auswahl der Übersetzungsstufe 540 mit dem ersten Übersetzungsverhältnis i1 oder der Übersetzungsstufe 1000 mit dem dritten Übersetzungsverhältnis i3 sowie eine weitere Schaltvorrichtung 9 zur Auswahl der Übersetzungsstufe 540E mit dem zweiten Übersetzungsverhältnis i2 oder der Übersetzungsstufe 1000E mit dem vierten Übersetzungsverhältnis i4 angeordnet. Weiterhin sind Bremsvorrichtungen 14 und 14' vorgesehen, die auf die Ausgangswelle 3 einwirken können.

Vor der ersten Kupplung 7 ist ein Zahnrad Z11 und hinter der ersten Kupplung 7 ist ein Zahnrad Z12 drehbar gelagert angeordnet. Bei einer Druckbeaufschlagung der ersten Kupplung 7 mit einem Drucköl stellt diese eine reibschlüssige Verbindung zwischen der Eingangswelle 2 und den Zahnrädern Z11 und Z12 her. Vor der zweiten Kupplung 8 ist ein Zahnrad Z13 und hinter der zweiten Kupplung 8 ist ein Zahnrad Z14 drehbar gelagert angeordnet. Bei einer Druckbeaufschlagung der zweiten Kupplung 8 mit einem Drucköl stellt diese eine reibschlüssige Verbindung zwischen der Eingangswelle 2 und den Zahnrädern Z13 und Z14 her. Dazu sind die Kupplungstrommeln der ersten Kupplung 7 und der zweiten Kupplung 8 derart ausgebildet, dass an einem vorderen und/oder hinteren Ende der ersten Kupplung 7 und der zweiten Kupplung 8 das jeweilige auf der Eingangswelle 2 drehbar gelagerte Zahnrad Z11 und Z12 bzw. Z13 und Z14 formschlüssig mit der ersten Kupplung 7 bzw. der zweiten Kupplung 8 verbunden sind.

Auf der Ausgangswelle sind Zahnräder Z21, Z22, Z23 und Z24 drehbar gelagert angeordnet. Die Zahnräder Z21 und Z22 sind jeweils mittels einer Lagerstelle 20 bzw. 21 drehbar gelagert. Die Zahnräder Z23 und Z24 sind jeweils mittels einer Lagerstelle 16 bzw. 17 drehbar gelagert. Zwischen den Zahnrädern Z21 und Z22 ist die Schaltvorrichtung 9' angeordnet. Die Schaltvorrichtung 9' ist mittels einer Wellen-Naben-Verbindung drehfest mit der Ausgangswelle 3 verbunden ist. Die Schaltvorrichtung 9' ist unterhalb der ersten Kupplung 7 platziert, wodurch eine sehr kompakte Bauweise der Zapfwellenanordnung 22 erreicht wird. Zwischen den Zahnrädern Z23 und Z24 ist die Schaltvorrichtung 9 angeordnet. Die Schaltvorrichtung 9 ist mittels einer Wellen-Naben-Verbindung drehfest mit der Ausgangswelle 3 verbunden ist. Die Schaltvorrichtung 9 ist unterhalb der zweiten Kupplung 8 platziert, wodurch eine sehr kompakte Bauweise der Zapfwellenanordnung 22 erreicht wird.

Die beiden Schaltvorrichtungen 9 bzw. 9' weisen jeweils drei Schaltpositionen auf. Die Schaltvorrichtung 9 weist eine erste Schaltposition 540, eine Neutralstellung und eine zweite Schaltposition 1000 auf. In der ersten Schaltposition 540 verbindet die Schaltvorrichtung 9' das Zahnrad Z21 formschlüssig mit der Ausgangswelle 3. In der zweiten Schaltposition 1000 verbindet die Schaltvorrichtung 9' das Zahnrad Z22 formschlüssig mit der Ausgangswelle 3. Die Schaltvorrichtung 9 weist eine erste Schaltposition 540E, eine Neutralstellung und eine zweite Schaltposition 1000E auf. In der ersten Schaltposition 540E verbindet die Schaltvorrichtung 9 das Zahnrad Z23 formschlüssig mit der Ausgangswelle 3. In der zweiten Schaltposition 1000E verbindet die Schaltvorrichtung 9 das Zahnrad Z24 formschlüssig mit der Ausgangswelle 3.

Die Bremsvorrichtung 14 wirkt auf das Zahnrad Z24 ein, wodurch dieses gegenüber dem Gehäuse 4 abgebremst werden kann. Diese Anordnung der Bremsvorrichtung 14 setzt voraus, dass zur Erzielung der Bremswirkung die Schaltvorrichtung 9 sich in der zweiten Schaltstellung 1000E befindet. Zur Ansteuerung der Bremsvorrichtung 14 kann ein hydraulisch betätigbares Ventil vorgesehen sein. Die Bremsvorrichtung 14' wirkt im dargestellten Ausführungsbeispiel auf das Zahnrad Z21 ein, wodurch dieses gegenüber dem Gehäuse 4 abgebremst werden kann. Diese Anordnung der Bremsvorrichtung 14' setzt voraus, dass zur Erzielung der die Schaltvorrichtung 9' sich in der ersten Schaltstellung 540 befindet. Zur Ansteuerung der Bremsvorrichtung 14' kann ein hydraulisch betätigbares Ventil vorgesehen sein.

Durch die Betätigung eines Schalters oder eines Bedienhebels in der Fahrerkabine des Arbeitsfahrzeugs wird ein Steuerbefehl an die Steuervorrichtung 19 übermittelt, um die Ausgangswelle 3 einzuschalten und das Anbaugerät 6 auf eine Arbeitsdrehzahl zu bringen. Die Steuervorrichtung 19 steuert entsprechend die Schaltvorrichtung 9 bzw. 9' an und überführt diese in eine ihrer jeweiligen Schaltpositionen. Den Schaltvorrichtungen 9 und 9' ist jeweils ein Wegsensor 18 zugeordnet, welcher die gewählte Schaltposition der jeweiligen Schaltvorrichtung 9 bzw. 9' erkennt. Signale der Wegsensoren 18 werden durch eine Signalleitung an die Steuervorrichtung 19 übertragen und von dieser ausgewertet.

Die Zapfwellengetriebeanordnung 22 ermöglicht den Betrieb des Anbaugerätes 6 sowohl mit den Arbeitsdrehzahlen 540 U/min und 1000 U/min bei Motornenndrehzahl als auch den Betrieb mit den Arbeitsdrehzahlen 540 U/min und 1000 U/min bei reduzierter Motordrehzahl, wodurch ein verbrauchsärmerer Betrieb ermöglicht wird. Hierzu sind entweder die erste Kupplung 7 geschlossen und die zweite Kupplung 8 geöffnet, wobei die Schaltvorrichtung 9' in ihre erste Schaltposition 540 oder zweite Schaltposition 1000 geschaltet ist, oder die erste Kupplung 7 ist geöffnet und die zweite Kupplung 8 ist geschlossen, wobei die Schaltvorrichtung 9 in ihre erste Schaltposition 540E oder zweite Schaltposition 1000E geschaltet ist.

Den Zapfwellengetriebeanordnungen 1, 1' und 22 ist gemeinsam, dass diese es aufgrund ihrer bauraumsparenden Ausgestaltung und ihres modularen Aufbaus ermöglichen, alternativ zu einer klauengeschalteten Zapfwelle in den dafür vorgesehenen Bauraum einer Arbeitsmaschine eingebaut zu werden. Dabei bedienen sich die Zapfwellengetriebeanordnungen 1, 1' und 22 aus einem Baukasten mit einem hohen Anteil gleicher Komponenten. Der Baukasten umfasst die Eingangswelle 2 mit ihren Lagerstellen 10 und 11 sowie die Ausgangswelle 3 mit ihren Lagerstellen 12 und 13. Weiterhin umfasst der Baukasten die beiden baugleichen lastschaltbaren Kupplungen 7, 8 sowie die baugleichen Schaltvorrichtungen 9, 9' mit den ebenfalls baugleichen Wegsensoren 18. Die Bremsvorrichtungen 14 und 14' des Baukastens sind ebenfalls baugleich ausgeführt. Die auf der Eingangswelle 2 drehbar gelagert angeordneten Zahnräder Z11, Z12, Z13 und Z14, sowie die auf der Ausgangswelle 3 drehbar gelagert angeordneten Zahnräder Z21, Z22, Z23 und Z24 und die drehfest auf der Ausgangswelle 3 angeordneten Zahnräder Z32 und Z33 des Baukastens werden entsprechend der Komplexität bzw. Betriebscharakteristik der jeweiligen Zapfwellengetriebeanordnungen 1, 1' oder 22 ausgewählt. Alle Komponenten des Baukastens können in dem Gehäuse 4 angeordnet werden.

Ein weiterer Aspekt, der den Zapfwellengetriebeanordnungen 1, 1' und 22 gemeinsam ist, ist das einheitliche Kühlkonzept. In der als Vollwelle ausgeführten Eingangswelle 2 ist zumindest ein Kanal angeordnet, welcher der Zuführung eines Kühlmediums zu den auf der Eingangswelle 2 hintereinander angeordneten Kupplungen 7 und 8 dient. Die erste Kupplung 7 und die zweite Kupplung 8 ist jeweils durch eine Kupplungsnabe drehfest mit der Eingangswelle 2 verbunden. Koaxial zu der jeweiligen Kupplungsnabe ist jeweils eine Kupplungstrommel angeordnet. Zwischen der jeweiligen Kupplungsnabe und Kupplungstrommel ist das jeweilige Kupplungslamellenpaket der ersten Kupplung 7 bzw. der zweiten Kupplung 8 angeordnet. Von diesem in der Eingangswelle 2 verlaufenden Kanal zweigen Bohrungen ab, welche in Öffnungen in der jeweiligen Kupplungsnabe münden. Die Zuführung des Kühlmediums ist durch zumindest ein schaltbares Ventil steuer- oder regelbar. Für eine effiziente Kühlung ist vorgesehen, dass die Zeitdauer der Zuführung des Kühlmediums durch das zumindest eine schaltbare Ventil gesteuert wird. Je nach Art der Lastschaltung und der dabei verbrauchten Schaltleistung wird die Menge des erforderlichen Kühlmediums ermittelt und an die geschaltete, d.h. geschlossene erste Kupplung 7 und/oder zweite Kupplung 8 abgegeben. Berechnet wird die Menge aus dem Kupplungsdruck und dem Differenzdrehzahlverlauf über die Schaltzeit. Nach Abschluss der Kühlzeit wird das zumindest eine Ventil vollkommen geschlossen, so dass kein weiteres Kühlöl über die Getriebeölpumpe bereitgestellt werden muss. Dadurch kann die Getriebeölpumpe kleiner ausgelegt werden und der Wirkungsgrad im Antriebsstrang der Zapfwellengetriebeanordnung 1, 1' bzw. 22 erhöht sich.

Dabei kann der Umstand genutzt werden, dass die Kupplungen 7, 8 über jeweils ein Stetigventil oder Proportionalventil angesteuert werden. Der Stromverlauf über die Zeit bei der Ansteuerung des jeweiligen Proportionalventils, um die erste Kupplung 7 bzw. die zweite Kupplung 8 mit dem Druckmedium zu beaufschlagen, gibt Auskunft über den Druckverlauf des Druckmediums im Kolbenraum der jeweiligen Kupplung 7, 8. Es wird daher kein zusätzlicher Drucksensor gebraucht. Der Differenzdrehzahlverlauf der Kupplungen 7 bzw. 8 wird über Drehzahlsensoren erfasst. Dabei wird je ein Drehzahlsensor an der jeweiligen Kupplungstrommel und der Kupplungsnabe der Kupplungen 7 bzw. 8 angebracht.

### Bezugszeichenliste

| | | | |
|---|---|---|---|
| 1 | Zapfwellengetriebeanordnung | A | Achsabstand |
| 1' | Zapfwellengetriebeanordnung | i1 | Erstes Übersetzungsverhältnis |
| 2 | Eingangswelle | i2 | Zweites Übersetzungsverhältnis |
| 3 | Ausgangswelle | i3 | Drittes Übersetzungsverhältnis |
| 4 | Gehäuse | i4 | Viertes Übersetzungsverhältnis |
| 5 | Antriebsmotor | | |
| 6 | Anbaugerät | Z11 | Zahnrad |
| 7 | Erste Kupplung | Z12 | Zahnrad |
| 8 | Zweite Kupplung | Z13 | Zahnrad |
| 9 | Schaltvorrichtung | Z14 | Zahnrad |
| 9' | Schaltvorrichtung | Z21 | Zahnrad |
| 10 | Lagerstelle | Z22 | Zahnrad |
| 11 | Lagerstelle | Z23 | Zahnrad |
| 12 | Lagerstelle | Z24 | Zahnrad |
| 13 | Lagerstelle | Z32 | Zahnrad |
| 14 | Bremsvorrichtung | Z33 | Zahnrad |
| 14' | Bremsvorrichtung | | |
| 15 | Ölspiegel | | |
| 16 | Lagerstelle | | |
| 17 | Lagerstelle | | |
| 18 | Wegsensor | | |
| 19 | Steuervorrichtung | | |
| 20 | Lagerstelle | | |
| 21 | Lagerstelle | | |
| 22 | Zapfwellengetriebeanordnung | | |

## Patentansprüche

1. Zapfwellengetriebeanordnung (1, 1', 22) für ein kommunales oder landwirtschaftliches Arbeitsfahrzeug, umfassend eine Eingangswelle (2), die mit einem Antriebsmotor (5) verbindbar ist, und eine Ausgangswelle (3), die zur Verbindung mit einem Anbaugerät (6) eingerichtet ist, wobei die Eingangswelle (2) und die Ausgangswelle (3) von einem Gehäuse (4) umgeben sind, wobei zwischen der Eingangswelle (2) und der Ausgangswelle (3) mehrere Übersetzungsstufen zur Kopplung mit unterschiedlichen Übersetzungsverhältnissen vorgesehen sind, wobei ein Wechsel zwischen den Übersetzungsverhältnissen unter Last vollziehbar ist, wobei die mindestens dreistufige, lastschaltbare Zapfwellengetriebeanordnung (1, 1', 22) an der Eingangswelle (2) eine erste Kupplung (7) und eine zweite Kupplung (8) aufweist, wobei eine Kupplung (7, 8) eine erste Übersetzungsstufe mit einer ersten Übersetzung und einer zweiten Übersetzung aufweist und die andere Kupplung (7, 8) eine zweite Übersetzungsstufe mit zumindest einer weiteren Übersetzung aufweist, wobei die Übersetzungsstufen jeweils zur schaltbaren Kopplung der Eingangswelle (2) mit der Ausgangswelle (3) ausgebildet sind, **dadurch gekennzeichnet, dass** der jeweiligen Kupplung (7, 8) zumindest ein auf der Eingangswelle (2) drehbar gelagertes Zahnrad (Z11, Z12, Z13, Z14) zugeordnet ist, welches formschlüssig mit der jeweiligen Kupplung (7, 8) in Eingriff bringbar ist und dass zumindest eine Bremsvorrichtung (14, 14') vorgesehen ist, die auf zumindest ein Zahnrad (Z21, Z24) einer der Übersetzungsstufen einwirkt.

2. Zapfwellengetriebeanordnung (1, 1', 22) nach Anspruch 1, **dadurch gekennzeichnet, dass** auf der Ausgangswelle (3) zumindest eine Schaltvorrichtung (9, 9') unterhalb einer der Kupplungen (7, 8) angeordnet ist.

3. Zapfwellengetriebeanordnung (1, 1', 22) nach einem der Ansprüche 1 oder 2, **dadurch gekennzeichnet, dass** auf der Ausgangswelle (3) drei Zahnräder (Z21, Z22, Z24, Z32, Z33) angeordnet sind, wobei eines der Zahnräder (Z32, Z33) drehfest und die beiden anderen Zahnräder (Z21, Z22, Z24) drehmomentfrei auf der Ausgangswelle (3) angeordnet sind.

4. Zapfwellengetriebeanordnung (1, 1', 22) nach einem der Ansprüche 1 bis 3, **dadurch gekennzeichnet, dass** auf der Ausgangswelle (3) vier Zahnräder (Z21, Z22, Z23, Z24) drehmomentfrei angeordnet sind.

5. Zapfwellengetriebeanordnung (1, 1', 22) nach einem der Ansprüche 3 oder 4, **dadurch gekennzeichnet, dass** zumindest eines der drehmomentfreien Zahnräder (Z21, Z22, Z23, Z24) durch die zumindest eine Schaltvorrichtung (9, 9') mit der Ausgangswelle (3) formschlüssig verbindbar ist.

6. Zapfwellengetriebeanordnung (1, 1', 22) nach einem der vorangehenden Ansprüche, **dadurch gekennzeichnet, dass** die erste Kupplung (7) und die zweite Kupplung (8) oberhalb eines Ölspiegels (15) in dem Gehäuse (4) angeordnet sind.

7. Zapfwellengetriebeanordnung (1, 1', 22) nach einem der vorangehenden Ansprüche, **dadurch gekennzeichnet, dass** die Eingangswelle (2) als eine Vollwelle ausgeführt ist, in der zumindest eine Bohrung zur Zuführung eines Kühlmediums zu der ersten Kupplung (7) und der zweiten Kupplung (8) vorgesehen ist.

8. Zapfwellengetriebeanordnung (1, 1', 22) nach Anspruch 7, **dadurch gekennzeichnet, dass** die Zuführung des Kühlmediums durch zumindest ein schaltbares Ventil steuerbar ist.

9. Zapfwellengetriebeanordnung (1, 1', 22) nach Anspruch 8, **dadurch gekennzeichnet, dass** das zumindest eine schaltbare Ventil in Abhängigkeit vom Stromverlauf eines jeweiligen Stetigventils angesteuert wird, welches der Ansteuerung der ersten Kupplung (7) bzw. der zweiten Kupplung (8) dient.

10. Zapfwellengetriebeanordnung (1, 1', 22) nach einem der vorangehenden Ansprüche, **dadurch gekennzeichnet, dass** die Zapfwellengetriebeanordnung (1, 1', 22) modular aufgebaut ist.

## Claims

1. A power take-off transmission assembly (1, 1', 22) for a municipal or agricultural working vehicle, comprising an input shaft (2) which can be connected to a propulsion engine (5), and an output shaft (3) which is configured for connection to an attachment (6), wherein the input shaft (2) and the output shaft (3) are surrounded by a casing (4), wherein between the input shaft (2) and the output shaft (3), a plurality of gear stages for coupling with different gear ratios are provided, wherein a shift between the gear ratios can be carried out under load, wherein the at least three-speed power take-off transmission assembly (1, 1', 22), the gears of which can be shifted under load, has a first clutch (7) and a second clutch (8) on the input shaft (2), wherein one clutch (7, 8) has a first gear stage with a first gear and a second gear and the other clutch (7, 8) has a second gear stage with at least one further gear, wherein the respective gear stages are configured for selectable coupling of the input shaft (2) to the output shaft (3), **characterized in that** at least one gear wheel (Z11, Z12, Z13, Z14) which is rotatably mounted on the input shaft (2) is associated with the respective clutch (7, 8) and which can be brought into positive engagement with the respective clutch (7, 8), and **in that** at least one brake device (14, 14') is provided which acts on at least one gear wheel (Z21, Z24) in one of the gear stages.

2. The power take-off transmission assembly (1, 1', 22) according to claim 1, **characterized in that** at least one gear shift device (9, 9') is provided on the output shaft (3) below one of the clutches (7, 8).

3. The power take-off transmission assembly (1, 1', 22) according to claim 1 or claim 2, **characterized in that** three gear wheels (Z21, Z22, Z24, Z32, Z33) are disposed on the output shaft (3), wherein one of the gear wheels (Z32, Z33) is fixed against rotation and the other two gear wheels (Z21, Z22, Z24) are disposed on the output shaft (3) in a torque-free manner.

4. The power take-off transmission assembly (1, 1', 22) according to one of claims 1 to 3, **characterized in that** four gear wheels (Z21, Z22, Z23, Z24) are disposed on the output shaft (3) in a torque-free manner.

5. The power take-off transmission assembly (1, 1', 22) according to claim 3 or claim 4, **characterized in that** at least one of the torque-free gear wheels (Z21, Z22, Z23, Z24) can be positively engaged on the output shaft (3) by means of the at least one gear shift device (9, 9').

6. The power take-off transmission assembly (1, 1', 22) according to one of the preceding claims, **characterized in that** the first clutch (7) and the second clutch (8) are disposed above an oil level (15) in the housing (4).

7. The power take-off transmission assembly (1, 1', 22) according to one of the preceding claims, **characterized in that** the input shaft (2) is configured as a solid shaft in which at least one hole is provided in order to supply a cooling medium to the first clutch (7) and the second clutch (8).

8. The power take-off transmission assembly (1, 1', 22) according to claim 7, **characterized in that** the supply of the cooling medium can be controlled by means of at least one selectable valve.

9. The power take-off transmission assembly (1, 1', 22) according to claim 8, **characterized in that** the at least one selectable valve is controlled as a function of the path of flow of a respective proportional valve which acts to activate the first clutch (7) or the second clutch (8).

10. The power take-off transmission assembly (1, 1', 22) according to one of the preceding claims, **characterized in that** the power take-off transmission assembly (1, 1', 22) is modular in configuration.

## Revendications

1. Agencement de transmission de prise de force (1, 1', 22) pour un véhicule de travail communal ou agricole, incluant un arbre d'entrée (2), qui peut être relié à un moteur d'entraînement (5), et un arbre de sortie (3) qui est agencé pour être relié à un outil rapporté (6), l'arbre d'entrée (2) et l'arbre de sortie (3) étant entourés par un carter (4), entre l'arbre d'entrée (2) et l'arbre de sortie (3) étant prévus plusieurs étages de démultiplication pour un couplage avec différents rapports de démultiplication, un changement de rapport de démultiplication étant réalisable sous charge, l'agencement de transmission de prise de force au moins tri-étagé commandable sous charge (1, 1', 22) comportant sur l'arbre d'entrée (2) un premier accouplement (7) et un second accouplement (8), un accouplement (7, 8) comportant un premier étage de démultiplication avec une première démultiplication et avec une seconde démultiplication, et l'autre accouplement (7, 8) comportant un second étage de démultiplication avec au moins une autre démultiplication, les étages de démultiplication étant conçus respectivement pour un accouplement temporaire de l'arbre d'entrée (2) avec l'arbre de sortie (3), **caractérisé en ce qu'**à l'accouplement respectif (7, 8) est associée au moins une roue dentée (Z11, Z12, Z13, Z14) qui est montée à rotation sur l'arbre d'entrée (2) et qui peut être amenée en prise par complémentarité de formes avec l'accouplement respectif (7, 8), et **en ce qu'**au moins un dispositif de freinage (14, 14') est prévu, lequel agit sur au moins une roue dentée (Z21, Z24) d'un des étages de démultiplication.

2. Agencement de transmission de prise de force (1, 1', 22) selon la revendication 1, **caractérisé en ce que** sur l'arbre de sortie (3) est disposé au moins un dispositif de transmission (9, 9') au-dessous d'un des accouplements (7, 8).

3. Agencement de transmission de prise de force (1, 1', 22) selon une des revendications 1 ou 2, **caractérisé en ce que** sur l'arbre de sortie (3) sont disposées trois roues dentées (Z21, Z22, Z24, Z32, Z33), une des roues dentées (Z32, Z33) étant montée solidaire en rotation sur l'arbre de sortie (3) et les deux autres roues dentées (Z21, Z22, Z24) y étant montées sans moment de rotation.

4. Agencement de transmission de prise de force (1, 1', 22) selon une des revendications 1 à 3, **caractérisé en ce que** quatre roues dentées (Z21, Z22, Z23, Z24) sont montées sans moment de rotation sur l'arbre de sortie (3).

5. Agencement de transmission de prise de force (1, 1', 22) selon une des revendications 3 ou 4, **caractérisé en ce qu'**au moins une des roues dentées sans moment de rotation (Z21, Z22, Z23, Z24) peut être reliée à l'arbre de sortie (3) par complémentarité de formes par l'intermédiaire du au moins un dispositif de transmission (9, 9').

6. Agencement de transmission de prise de force (1, 1', 22) selon une des revendications précédentes, **caractérisé en ce que** le premier accouplement (7) et le second accouplement (8) sont disposés au-dessus d'un niveau d'huile (15) dans le carter (4) .

7. Agencement de transmission de prise de force (1, 1', 22) selon une des revendications précédentes, **caractérisé en ce que** l'arbre d'entrée (2) est conformé en arbre plein dans lequel au moins un perçage est prévu pour amener un agent de refroidissement au premier accouplement (7) et au second accouplement (8).

8. Agencement de transmission de prise de force (1, 1', 22) selon la revendication 7, **caractérisé en ce que** l'amenée de l'agent de refroidissement peut être commandée par l'intermédiaire d'au moins une valve commandable.

9. Agencement de transmission de prise de force (1, 1', 22) selon la revendication 8, **caractérisé en ce que** la au moins une valve commandable est commandée en fonction de la variation de débit d'une valve proportionnelle respective, laquelle sert à commander le premier accouplement (7), respectivement le second accouplement (8).

10. Agencement de transmission de prise de force (1, 1', 22) selon une des revendications précédentes, **caractérisé en ce que** l'agencement de transmission de prise de force (1, 1', 22) est de conception modulaire.
